# EUROPEAN PATENT APPLICATION

(11) **EP 1 239 630 A2**
(43) Date of publication of application: **11.09.2002**
(21) Application number: 02004232.1
(22) Date of filing: 26.02.2002
(51) Int. Cl.: H04L 12/28, H04L 9/32, H04Q 7/38

(54) **Method and apparatus for increasing the security of wireless data services**

(30) Priority: 01.03.2001 US 797359
(71) Applicant: Telefonaktiebolaget L M Ericsson (Publ), 126 25 Stockholm (SE)
(72) Inventor: Cooper, Gerald M., Gretna, Virginia 24557 (US)
(74) Representative: HOFFMANN - EITLE

(57) **Abstract**

The security of wireless communications between two or more devices is enhanced by requiring detection of the physical proximity of the devices. One or more of the devices operates in a non-secure mode, wherein the authentication process required to enter into secure communications is disabled. Upon detection of the physical proximity of another device, the device enters a secure mode, wherein authentication is enabled. The entry of a security code required by the authentication process may comprise the transmission of a device address or other data, either across the proximity detection interface or via the wireless communications interface. In addition to the detection of physical proximity, a hardware handshake protocol between the two devices may be defined. For additional security, the device must enter a handshake mode before the hardware handshake will complete. The handshake mode may require entry of a password or screening by a biometric sensor. Preferrably, the wireless communication system is based on the Bluetooth technology.

## Description

### BACKGROUND OF THE INVENTION

The present invention relates generally to the field of wireless networks, and specifically to a method and apparatus of increased security in establishing ad hoc wireless piconets.

Advances in microelectronics and packaging technology have prompted the development of a plethora of electronic devices, such as, for example, laptop and desktop computers, personal digital assistants (PDA), mobile radiocommunication terminals, and the like. Traditionally, such electronic devices have been connected to each other and to their various peripherals (such as printers, scanners, digital cameras, and the like) via wires or cables. Recent advances in radiocommunications technology have led to the development of wireless network systems, wherein a wide variety of electronic devices may communicate wirelessly, *i.e.,* without the need for physical interconnection via cables. Examples of such wireless network technology include the IEEE 802.11 wireless Wide Area Network (WAN) standard and the Bluetooth® standard developed and promulgated by Telefonaktiebolaget L.M. Ericsson, Sweden.

The Bluetooth® technology allows the dynamic formation of ad hoc networks connecting electronic devices. Extensive deployment of the Bluetooth® technology will lead to ubiquitous connectivity, wherein essentially all electronic devices will be able to communicate with each other. To facilitate this level of interconnectivity, the Bluetooth® standard defines the connectivity protocols of devices into small networks called piconets at the device link layer. In other words, the bulk of the tasks of dynamically establishing piconets, validating the piconet's members, data communications between members of the piconet, and the dissolution of the piconet, are transparent to the user.

While this architecture promotes ease of use and, thus, facilitates its widespread acceptance, there exist situations in which more extensive user control is desirable. In many cases, users may wish to explicitly define the parameters of a given piconet, including which devices are connected, and the circumstances attendant to the creation and dissolution of the piconet. Bluetooth® security protocols allow this degree of user control by having the user enter a specific code into each of two devices that he wishes to include in a piconet at the time of initial connection. These codes are used to generate a common link key, which is subsequently used by the Bluetooth® security protocols to authenticate the devices to each other prior to establishing a piconet link between them, and may be additionally used in data encryption.

However, it is envisioned that Bluetooth® technology may be embedded in devices with no keypad or other input means for entering such a code. Additionally, the physical punching-in of security codes in a variety of devices is time consuming and prone to error.

### SUMMARY OF THE INVENTION

The present invention entails a method of securing wireless communications between at least two devices across a wireless communications link, by detecting the physical proximity of the devices. One of the devices operates in a non-secure mode, wherein the authentication process required to enter into secure communications is disabled. Upon detection of the physical proximity of another device, the device enters a secure mode, wherein authentication is enabled. The entry of a security code required by the authentication process may comprise the transmission of a device address or other data, either across the proximity detection interface or via the wireless communications interface. In addition to the detection of physical proximity, an optional hardware handshake protocol between the two devices may be defined. For additional security, a further optional requirement may be that the device enters a handshake mode before the hardware handshake will complete. For still greater security, the handshake mode may optionally require entry of a password or screening by a biometric sensor.

### BRIEF DESCRIPTION OF DRAWINGS

Figure 1 is a timing diagram depicting a simple hardware handshake protocol;
Figure 2 is a flowchart depicting the proximity detection and authentication method according to the present invention.

### DETAILED DESCRIPTION OF THE INVENTION

The present invention is directed to increased user-controlled security of communications between two or more electronic devices over a wireless network medium. A notable example of such wireless network technology is the Bluetooth® standard published by Telefonaktiebolaget L.M. Ericsson of Sweden. The Bluetooth® interface is a universal radio interface in the 2.45 GHz frequency band that enables portable electronic devices to connect and communicate wirelessly via short-range, ad hoc networks. Persons interested in various details regarding the Bluetooth® technology are referred to the article entitled "The Bluetooth® Radio System" authored by Jaap Haartsen, which can be found in the IEEE Personal Communications, February, 2000, the disclosure of which is incorporated herein by reference. Security features of the Bluetooth® standard are described in Chapter 8 of Bluetooth Demystified by Nathan J. Muller, the disclosure of which is also incorporated herein by reference. While the present invention is explicated herein with reference to the Bluetooth® standard, it is noted that the present invention is not limited to such use, but may be employed to increase user convenience and data communications security in any wireless network system.

The Bluetooth® air interface is based on a Frequency Hopping (FH), Code Division Multiple Access (CDMA) scheme. One Bluetooth® device, designated the "master" controls the FH channel. All other Bluetooth® devices participating in wireless communication on that channel, or in the "piconet," are referred to as "slaves." Every Bluetooth® device is identified by a unique 48-bit "Bluetooth® device address." A Bluetooth® master device must know the device address of a slave before a connection to it can be established. A master device obtains the device addresses of surrounding slave devices thorough a process known as an "inquiry." Upon issuance of an inquiry by a master device, all proximate Bluetooth® devices that are in discoverable mode will respond by transmitting their device addresses to the inquiring device. A Bluetooth® device in non-discoverable mode ignores inquiries and does not transmit its device address to any other device (and hence does not join any piconets).

Having obtained a slave device's Bluetooth® device address (such as through an inquiry), a master device establishes a connection to the slave device thorough a process known as "paging." A page is always directed towards one device, and contains the targeted device's Bluetooth® device address. If the slave device is in connectable mode, it may respond to the page and a connection is established. If the slave device is in non-connectable mode, it will ignore the page request. A Bluetooth® device may enter non-connectable mode after having already established one or more connections.

If the security settings on the slave device warrant, the slave may decline to connect immediately following a page, but may instead demand authentication of the master device. This process involves a 128-bit common secret link key, a 128-bit challenge, and a 32-bit response. The secret link key is derived from an up to 128-bit security code entered into both devices by a user, referred to herein as the "security code." If the authentication is successful, a connection is formed, and the link key is retained by both devices and used to encrypt the data portion of communication packets transferred between them. This authentication procedure is known as "pairing." A slave may be in a pairable mode, in which the above-described authentication procedure is initiated, or in non-pairable mode, in which case the slave cannot enter into a secure connection.

The Bluetooth® standard defines three security modes. Security mode 1 refers to the absence of any security. Mode 1 allows devices to communicate freely on any Bluetooth® piconet that they detect. Mode 1 is useful for ubiquitous automatic data communications, such as for example, trading business card between PDAs, or transmitting advertising data to a cell phone as a user passes a retail shop or restaurant.

Security mode 2 provides service-level security. Mode 2 allows for versatile access and authorization protocols, allowing for example, parallel applications on a particular device to operate under different security levels.

Security mode 3 refers to the link-level security, wherein identification, authentication, and encryption are enforced at the hardware level at the time of connection setup, and are thus transparent to the user. Mode 3 may be employed, for example, in a home network, where all devices are known, and where no "foreign" devices are contemplated as sharing access to the wireless network.

Security modes 1 and 3 are "default" modes, in that devices in modes 1 or 3 enforce the relevant security protocols automatically, regardless of the user or application. Security mode 2 provides for greater flexibility, and requires intervention by an application, a user, or both to define and implement the desired level of security for each network connection. To support and enable a variety of security protocols, the Bluetooth® architecture defines a security manager. A security manager is an entity in the network protocol stack that is responsible for storing and retrieving security-related information on services and devices, responding to access requests, enforcing authentication and/or encryption, and the like. However, no hardware related aspects of the security manager are specified by the Bluetooth® architecture, such as any specific device physical proximity, hardware handshake modes, or the like.

In complex devices with sophisticated user interfaces, such as, for example, laptop computers, PDA's, or desktop and mobile telephone terminals, the security manager may contain and implement an arbitrarily complex and intricate set of security protocols. For example, highly secure wireless connections may be established for specific limited purposes, and subsequently disbanded. Implementation of such secure network connections would normally occur by the user entering a security code of up to 128 bits in each device to be securely, wirelessly connected. A combination link key is derived from the security code. The security code is discarded and the combination link key is retained by each device and used for authentication during pairing and for encryption during data communications.

However, entry of a security code may be problematic in the case of devices with no user interface or a limited functionality user interface, such as for example, Bluetooth®-enabled headsets, digital cameras, scanners, and the like. One possible solution regarding such devices is the use of the Bluetooth® device address as a security code, assuming that the Bluetooth® device address is printed on the wireless device or otherwise available to the user in human-readable format, allowing the user to enter this code into a Bluetooth® device having a user interface including a numeric or alphanumeric input capability. However, the Bluetooth® device address will not always be made available, and additionally the provision of the address is itself a security risk, as it allows secure connections to be made by another in the legitimate user's absence.

Additionally, even if all devices have user input functionality, the security of connections between the devices may be compromised by an unauthorized user gaining physical access to one or more of the devices (*e.g.*, at night or at other times when the authorized user is away) and improperly joining the piconet. The unauthorized user may then be able to later eavesdrop communications on the piconet if he is within range to receive them.

The present invention exploits the user's physical control over devices to establish a secure connection on a wireless piconet, regardless of the provision of a user interface on each device or access to the Bluetooth® device address. Furthermore, the present invention severely limits the possibility of eavesdroppers joining a secure wireless piconet, regardless of their knowledge of the device addresses, or even of the Bluetooth® security code, by enforcing simultaneous physical proximity of the devices to establish at least an initial secure connection. In addition, the present invention provides a scalable range of increasing security by optionally further requiring: a hardware handshake between the devices when their physical proximity is detected; a specific handshake mode in which the hardware handshake is enabled; and a user discrimination action (such as, for example, entering a password or passing a biometric scan) required to place the device in handshake mode.

According to the present invention, a device has two modes - non-secure mode in which authentication (as, for example, via "pairing" per the Bluetooth® protocol) is disallowed, and a secure mode, in which authentication is allowed. A device operating in non-secure mode enters its secure mode only upon detection of the physical proximity of another wireless communication device. Thus, authentication is only enabled when the devices are physically proximate each other. As used herein, "physical proximity" means that both devices are within at least twelve inches of each other; more advantageously within at least six inches of each other; still more advantageously within at least two inches of each other; and most advantageously the devices are physically touching. The detection of physical proximity between two or more devices may be implemented in a wide variety of ways; some of the many possible technologies and methods of detecting physical proximity are described herein, by way of example and without limitation.

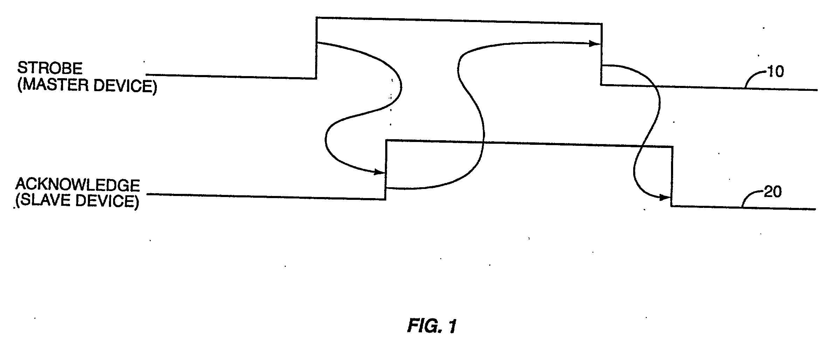

According to another aspect of the present invention, the security of communications between devices may be enhanced by requiring, in addition to the mere detection of physical proximity between devices, that the devices affirmatively acknowledge each others' detection by engaging in a hardware handshake. The concept of a hardware handshake is well known in the electrical and communications arts. As a simple example, Figure 1 depicts a handshake typical of control signals on a computer bus. Initially, a master device asserts a STROBE signal 10, in this example by changing the logic state of the signal from a 0 to a 1. The STROBE signal 10 may be directly connected to only one slave device, or alternatively, it may qualify an address on an associated address bus, which two or more slave devices decode and compare to their assigned address. The details of the bus operation other than control signals are not relevant to the current discussion. Upon detecting the STROBE signal 10, the slave device optionally performs a task (such as for example retrieving and supplying data) and asserts an ACKNOWLEDGE signal 20, in this example also by transitioning the signal from a logic 0 to a 1. The master device detects this transition of the ACKNOWLEDGE signal 20, and in response thereto, deasserts the STROBE signal 10. The STROBE signal 10 is not deasserted until the master device detects the assertion of the ACKNOWLEDGE signal 20. Similarly, the slave device maintains the ACKNOWLEDGE signal 20 in an asserted state until it senses the deassertion of the STROBE signal 10. Following the deassertion of the STROBE signal 10, the slave deasserts the ACKNOWLEDGE signal 20. In general, a handshake may comprise any of a wide variety of directed call/response interactions. The master may, for example, transmit a particular digital code to a slave, receiving a particular code in return, perhaps derived from the master's code. The specific details of the implementation of a hardware handshake are not relevant to the present invention. The requirement of a hardware handshake in addition to the mere detection of physical proximity of the two devices provides additional security by ensuring that the two particular devices to be joined in a piconet are the ones that are proximate each other.

According to another aspect of the present invention, the security of communications between the devices may be further enhanced by defining a handshake mode in one or both devices, wherein the hardware handshake is only enabled when the device is placed in handshake mode. This feature reduces the probability of a surreptitious or malicious handshake, wherein an eavesdropping device is brought within physical proximity with a device and engages in a proximity detection and hardware handshake (thus allowing authentication) without the user's knowledge. Handshake mode may be enabled, for example, by a actuating a switch on the device, or under software control.

According to yet another aspect of the present invention, communications security is enhanced still further by requiring that the user enter a password into a device before that devices enters handshake mode. Alternatively, and for even greater security, handshake mode may be entered only after successfully passing a biometric scan via a biometric sensor. A biometric sensor detects and uniquely identifies an immutable, unique physical characteristic or property of a person, such as for example, a fingerprint, voiceprint, or eye iris pattern, and compares this characteristic to previously stored representation of the characteristic. An example of a biometric sensor is the FlU-700 Fingerprint Identification Unit available from Sony Corporation, described at www.world.sony.com/Electronics/puppy/index.html, the disclosure of which is incorporated herein by reference.

As an example of the security features of the present invention, consider a Bluetooth®-equipped desktop or mobile telephone terminal. Two or more users may wish to simultaneously engage in one end of a telephone conversation. For convenience, voice quality, security (to prevent audible eavesdropping of the other side of the conversation), and/or decorum, each user may choose to employ a Bluetooth®-equipped headset in lieu of placing the telephone terminal in speakerphone mode. According to the present invention, both headsets and the telephone terminal would initially be in non-secure mode, and capable only of non-secure communications. To engage in pairing and establish a secure piconet according to the Bluetooth® protocol, the devices would need to be placed in secure mode by bringing them into close physical proximity. The physical proximity may be enforced by, for example, providing connector contacts on each headset, that must be physically touched to corresponding connector contacts on the telephone terminal. Additionally, the headset may require completion of a hardware handshake protocol with the telephone terminal to enter secure mode. The hardware handshake may take place via the exchange of electrical signals across the connector contacts when the two devices are touching. To accomplish the hardware handshake, the telephone terminal may require that the user enter a password on the keypad to place it in handshake mode, and each headset may require that a momentary switch on the headset be depressed to place it in handshake mode.

The Bluetooth® device address of each headset, or other data, may be transferred from each headset to the telephone terminal as part of the authentication process, either across the contact connectors interface or via the Bluetooth® air interface, and may be used as the security code to generate a combination link key between the headset and the telephone terminal. This relieves the user of the task of manually entering a Bluetooth® security code into the telephone terminal, and does not require that the Bluetooth® device address be printed on the body of the headset.

Due to the dominion exercised by the user over the physical proximity of the telephone terminal and each headset in establishing the communication link, and additionally due to the requirement that the devices be placed in a handshake mode prior to the exchange of security codes (and in particular requiring the entry of a password on one device to do so), an outsider with a Bluetooth®-enabled headset, even within range of the piconet, would be unable to eavesdrop the conversation, as the data communications are encrypted by the common link key. The outsider may not surreptitiously join the piconet, as this would require not only physically touching his headset to the telephone terminal, but additionally entering the password into the telephone terminal.

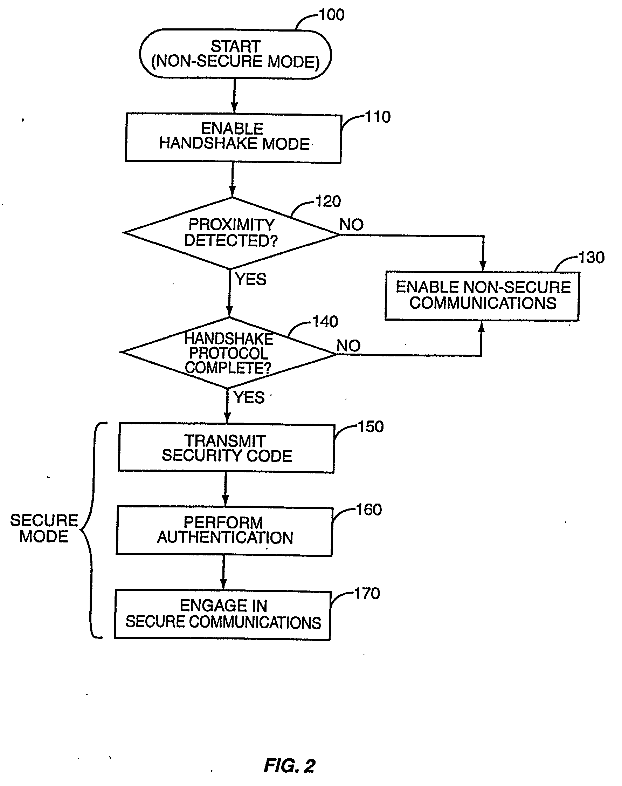

Figure 2 depicts, in flowchart form, the process of engaging a slave device, such as a headset, in a secure piconet according to an exemplary embodiment of the present invention. The device is initially in non-secure mode (step 100). To enable the device to join a secure piconet, the user enables a handshake mode on the device (step 110). This may comprise, for example, depressing a momentary switch on the device. A proximity detector in the device determines if it is in sufficiently close physical proximity with a master device (step 120). If not, the device may not perform authentication and enter a secure piconet, but may enter into a non-secure piconet that does not require authentication (step 130). If the device detects physical proximity to another device, it completes a hardware handshake with the device across the proximity detection interface (step 140). If the device fails to complete the hardware handshake, it may only join a non-secure piconet (step 130). When the handshake protocol is completed, the slave device may transmit a security code to the master device for use in generating a link key (step 150). This transmission may be across the proximity interface, or alternatively may be across the wireless communication air interface. The slave device then challenges the master device to authenticate itself, using the link key generated from the security code (step 160). The two devices proceed with the authentication procedure, and then form a secure piconet, with encrypted data communication (step 170).

As in the above example, the interface that detects and verifies the physical proximity of two or more devices, and that optionally engages in a hardware handshake between the devices, may additionally comprise the medium for the transmission of a Bluetooth® security code between the devices (which may be the Bluetooth® device address of one device). In one illustrative embodiment, this may comprise the provision of one or more electrical contacts, for example affixed to the external surface of each device, establishing electrical contact and hence data communications with a similarly positioned electrical contact disposed on the exterior of another device. One example of a single connector contact capable of two-way data communications is the iButton® technology available from Dallas Semiconductor, Inc., of Dallas, Texas, and described in "The Book of iButton® Standards," document 081297, published by Dallas Semiconductor, Inc., and incorporated herein by reference.

Alternatively, the connector contacts on Bluetooth®-enabled devices may comprise two or more external contacts, as are currently provided on many mobile radiocommunication terminals for connection to battery rechargers and the like. The multiple connection contacts may define transmit and receive signal terminals, as is well known in serial data communications systems. The connector contacts may be spatially oriented, as through the provision of physically mating housings, forcing a relative orientation between the two devices and hence a specific alignment and connection order. Such surface connection contacts and alignment enforcement issues are well known in the art, are not critical to the present invention, and thus are not further explicated herein. As another example, the electrical connection between the two devices may be accomplished across one or more electrically conductive cables.

In another exemplary embodiment, the physical proximity detection and Bluetooth® security code transmission system may comprise an electromagnetic link between the devices to be connected. If the electromagnetic link has a sufficiently short operating range, the security advantages of requiring close physical proximity between the devices to establish a link are realized, but the need to actually touch the devices to each other in any particular orientation or configuration is avoided. Such an electromagnetic link may comprise inductive or capacitive coupling or magnetic coupling.

One example of a well-developed technology suited for such application is the field of radio frequency identification (RFID). An RFID system is typically asymmetrical, comprising a relatively complex RFID interrogator (also known as an RFID reader), and a plurality of relatively simple corresponding RFID transponders or "tags." When one or more RFID tags come into the operating range of an RFID interrogator, they transmit data (typically, a unique identification code) to the interrogator. This asymmetry of design may be well suited to Bluetooth® devices. For example, in the scenario described above, an RFID interrogator may be incorporated into the relatively complex telephone terminal, with the relatively simple headsets equipped with corresponding RFID tag circuitry. In this scenario, the telephone terminal would function as a "master, "with each headset functioning as a "slave." This master/slave functional designation may, or may not, correspond to the master/slave functional designation defined by the Bluetooth® specification regarding the establishment of piconets. The RFID interrogator may output a single frequency RF signal with a limited effective range, with each RFID tag, via a response signal, responding by communicating an identification code. The RFID interrogator may generate an RF sine wave that optionally provides power to the RFID tags, a synchronized clock source to the RFID tags, and functions as a carrier for returned data from RFID tags. Each RFID tag in a Bluetooth® device may contain a coil antenna. The time-varying magnetic field of the electro-magnetic output of RFID interrogator induces an AC voltage in the coil antenna of the RFID tag as the slave Bluetooth® device is brought within range of the RFID interrogator. This voltage may be rectified by electronics in the RFID tag, and power a silicon memory chip and associated logic. Alternatively, the RFID tag may be powered by a separate power source, such as a battery. Once the RFID tag has received sufficient energy from its coil antenna or battery to operate correctly, it divides down the RF carrier signal and begins clocking its data to an output transistor connected across the coil antenna. The output transistor shunts the coil sequentially, corresponding to the data being clocked out of the memory array. Shunting the coil causes a momentary fluctuation of the carrier signal, which is detected by the RFID interrogator in the master Bluetooth® device. In this manner, commonly referred to as "backscatter modulation," each slave Bluetooth® device may communicate its Bluetooth® security code or other data to the master Bluetooth® device. Both passive (unpowered tags) and active (powered tags) RFID systems are well known in the art. For further explanation, one is directed "Micro ID 125 kHz RFID System Design Guide," publication no. DS51f15E, available from Microchip Inc., of Chandler, Arizona, the disclosure of which is incorporated herein by reference.

In another exemplary embodiment, the proximity detection and security code transmission system of the present invention may comprise magnetic coupling technology. Magnetic coupling technologies are employed in Electromagnetic Article Surveillance (EAS) systems commonly used for anti-theft control of books in libraries, CDs in stores, and the like. In such EAS systems, an alternating magnetic field is applied within an interrogation zone and the presence of a ferromagnetic marker within the zone is detected based on signals produced by the marker in response to the applied field. As the magnetic field alternates, the magnetization of the marker material reverses. Each magnetization reversal produces a pulse of an external polar magnetic field, which can be detected. Incorporation of this technology is directly analogous to that of the RFID system described above, with the master Bluetooth® device containing a magnetic interrogator and the master Bluetooth® devices containing a ferromagnetic marker. Magnetic coupled markers are described in U.S. Patent No. 3,665,449 to Elder *et al.,* entitled "Method and Apparatus for the Detecting at a Distance the Status and Identity of Objects," the disclosure of which is incorporated herein by reference. As an example, a magnetic strip and detection system utilizing this technology is commercially available from 3M of St. Paul, Minn., and is sold under the product name TATTLE TAPE®.

In yet another exemplary embodiment of the present invention, the detection of the physical proximity of two or more Bluetooth® devices to each other, and the exchange of a security code between the devices, may be accomplished with a line-of-sight transmission and concomitant reception, such as an infrared or other optical data link. As one example of such technology, the Infrared Data Association (IrDA), an industry consortium, has published both IrDA Data and IrDA Control specifications. IrDA Data is an interoperable universal two way cordless infrared light transmission data port capable of up to 4Mb/s data transfer across as little as a 20 cm (defined for low power devices). IrDA Control is an infrared communication standard that allows cordless peripherals to interact with many types of intelligent host devices at data rates up to 75Kb/s. Further information is available from the "IrDA SIR Data Specification," "IrDA Control Specification," and "IrCOMM 1.0," published by the Infrared Data Association of Walnut Creek, California (www.irda.org), and incorporated herein by reference. The optical interface may work via line-of-sight transmission through the air, or alternatively via one or more optical waveguides, such as for example, fiber optics cable.

In still another exemplary embodiment of the present invention, the physical proximity detection and security code exchange interface may comprise a limited-range ultrasonic, audible, or other sonic system. In such a system, the proximity of the devices may be detected by measuring the signal propagation time between the two devices.

According to the present invention, the security of dynamically created ad-hoc wireless networking piconets is enhanced by exploiting the user's physical dominion over the devices to be connected, by requiring that the devices be brought into close physical proximity to each other and additionally by engaging in a hardware handshake. Once proximity is detected and the handshake is complete, the devices may engage in authentication procedures, such as the "pairing" procedure defined in the Bluetooth® specification, to establish secure piconet connections. It is not necessary for the present invention that a Bluetooth® security code (*e*.*g*., the Bluetooth® device address of one or more of the devices) be transferred across the same data link as that used to verify physical proximity and complete the handshake protocol. A security code may be transferred across the wireless networking air interface, but according to the present invention, completion of the authentication procedure depends upon the detection of proximity and optionally the completion of the hardware handshake. In this manner, the proximity detection and handshake hardware of the present invention is minimized in scope and complexity, with concomitant resulting cost savings.

All of the proximity detection and data communication technologies described above are applicable to an embodiment of the present invention wherein only proximity detection, and optionally hardware handshaking, occur across the proximity detection interface, and the exchange of security codes occurs across the wireless network air interface. For example, a simple electrical contact between one or more externally located connection contacts on each device may be sufficient for proximity detection and hardware handshake. Alternatively, electromagnetic coupling (including inductive and capacitive coupling and magnetic coupling) may be detected, thus verifying that the devices are within a limited operating range, without the transmission of data occurring across the interface. Additionally, an infrared or other optical line-of-sight interface, or a short-range ultrasonic, acoustic, or other sonic interface may be utilized. In general, those of ordinary skill in the art will recognize that a wide array of technologies and techniques may be employed to verify the physical proximity of two or more devices and complete a hardware handshake, to enable the establishment of secure communications as disclosed and claimed herein.

Thus, although the present invention has been described herein with respect to particular features, aspects and embodiments thereof, it will be apparent that numerous variations, modifications, and other embodiments are possible within the broad scope of the present invention, and accordingly, all variations, modifications and embodiments are to be regarded as being within the scope of the invention. The present embodiments are therefore to be construed in all aspects as illustrative and not restrictive and all changes coming within the meaning and equivalency range of the appended claims are intended to be embraced therein.

## Claims

1. A method of securing wireless communications between two devices across a wireless communications link, comprising:
detecting the physical proximity of said devices;
performing authentication between said devices in response to said detected proximity; and
engaging said devices in secure wireless communication following said authentication.

2. The method of claim 1, wherein detecting the physical proximity of said devices comprises performing a hardware handshake via an interface having a limited operating range.

3. The method of claim 2, wherein said limited operating range interface requires physical contact between said two devices.

4. The method of claim 3, wherein said physical contact comprises contact selected from the group consisting of electrical contact between at least one electrode disposed on the exterior of each said device, electrical contact between said devices via at least one electrically conductive cable connected between said devices, and optical contact between said devices via at least one optically conductive waveguide connected between said devices.

5. The method of claim 2, wherein said limited operating range interface is selected from the group consisting of electro-magnetic coupling, inductive coupling, backscatter modulation of a radio frequency electro-magnetic field, magnetic coupling, capacitive coupling, sonic signals transferred between said devices, and line-of-sight transmission of optical signals between said devices.

6. The method of claim 1, wherein said physical proximity of said devices is in the range from 0 to about 6 inches.

7. The method of claim 6, wherein said physical proximity of said devices is in the range from 0 to about 2 inches.

8. The method of claim 7, wherein said physical proximity of said devices comprises physical contact between said devices.

9. The method of claim 2, wherein performing a hardware handshake occurs only when at least one of said devices is in a hardware handshake mode.

10. The method of claim 9, additionally comprising placing said device in said hardware handshake mode by an action selected from the group consisting of actuation of a switch, entering a password, and completing a biometric scan.

11. The method of claim 1, wherein performing authentication between said two devices in response to said detected proximity comprises transferring a security code from one said device to the other.

12. The method of claim 11, wherein said security code is transferred across said wireless communications link.

13. A method of selectively allowing authentication between a first and second device, each said device capable of wireless communications, said first device having a first mode wherein said authentication is inhibited and a second mode wherein said authentication is allowed, comprising:
operating said first device in said first mode;
entering said second mode in response to detecting the physical proximity of said second device by said first device; and
performing said authentication in said second mode.

14. The method of claim 13, wherein detecting the physical proximity of said second device by said first device comprises the completion of a hardware handshake between said first and second devices, said handshake occurring across an interface with a limited operating range.

15. The method of claim 14, wherein said hardware handshake is performed only when said first device is in a handshake mode.

16. The method of claim 15, additionally comprising placing said device in said hardware handshake mode by an action selected from the group consisting of actuation of a switch, entering a password, and completing a biometric scan.

17. The method of claim 13, wherein performing said authentication in said second mode includes transferring a security code from said first device to said second device.

18. The method of claim 17, wherein said security code is transferred across said limited operating range interface.

19. The method of claim 17, wherein said security code is transferred across the wireless communications interface of said first and second devices.

20. A first device capable of wireless communications, adapted to detect the physical proximity of said first device to a second device capable of wireless communications, and further adapted to allow authentication with said second device thereby enabling secure wireless communications therebetween, in response to said detection of physical proximity of said first and second devices.
